Europäisches Patentamt

European Patent Office

Office européen des brevets

(11) Numéro de publication : **0 315 516 B1**

(12) **FASCICULE DE BREVET EUROPEEN**

(45) Date de publication du fascicule du brevet :
24.07.91 Bulletin 91/30

(51) Int. Cl.⁵ : **B60J 7/04**

(21) Numéro de dépôt : **88402732.7**

(22) Date de dépôt : **28.10.88**

(54) **Dispositif de fixation du toit ouvrant d'un véhicule automobile sur la caisse de celui-ci.**

(30) Priorité : **03.11.87 FR 8715221**

(43) Date de publication de la demande :
**10.05.89 Bulletin 89/19**

(45) Mention de la délivrance du brevet :
**24.07.91 Bulletin 91/30**

(84) Etats contractants désignés :
**DE GB IT**

(56) Documents cités :
**FR-A- 2 577 175**
**PATENT ABSTRACTS OF JAPAN, vol. 6, no. 105 (M-136)(983), 15th June 1982**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Berthommier, Jean-Paul**
**Les Treize Arpents 6 Allée du Mail**
**F-78340 Les Clayes Sous Bois (FR)**

(74) Mandataire : **Berger, Helmut et al**
**Cabinet Z. WEINSTEIN 20, avenue de Friedland**
**F-75008 Paris (FR)**

## Description

L'invention concerne un dispositif de fixation du toit ouvrant d'un véhicule automobile muni d'un pavillon comportant un ajour et rigidifié par un cadre d'ajour, ce pavillon étant propre à coiffer la caisse du véhicule en s'appuyant sur un brancard rigide périphérique.

Il est connu de fixer le toit ouvrant selon la séquence suivante :

— hors chaîne, le cadre d'ajour est soudé sur le pavillon ajouré et l'ensemble est soudé à la caisse ;

— en chaîne de montage, le toit ouvrant est fixé au cadre d'ajour.

Il est souhaitable qu'un même toit ouvrant puisse être monté sur plusieurs véhicules. Dans le cas où les dimensions latérales du toit ouvrant excèdent le périmètre intérieur du brancard, il n'est pas possible de prévoir sur le cadre d'ajour des moyens de fixation appropriés au toit ouvrant. Le pavillon muni de son cadre d'ajour ne pourrait pas s'engager sur le brancard.

La présente invention a pour objectif de proposer un dispositif de fixation qui permet de résoudre le problème qui vient d'être énoncé.

Pour atteindre ce but, le dispositif de fixation selon l'invention est caractérisé en ce qu'il comporte des moyens de fixation longitudinaux du toit ouvrant sur le cadre d'ajour et des moyens de fixation latéraux du toit ouvrant sur le brancard.

Selon une caractéristique avantageuse de l'invention, les moyens de fixation latéraux comportent des épingles vissées au brancard et susceptibles d'être fixées par serrage à des pattes latérales appartenant au toit ouvrant.

Selon encore une autre caractéristique avantageuse de l'invention, l'épingle est formée par une tôle avantageusement rectangulaire, de forme allongée et pliée selon une ligne perpendiculaire à son axe longitudinal, dont la partie ouverte vient pincer la patte du toit ouvrant et qui comporte du côté du pli une boutonnière dans laquelle s'engage une vis de serrage et de fixation au brancard.

Selon encore une autre caractéristique avantageuse de l'invention, l'épingle comporte sur l'une de ses faces internes venant en contact avec la patte du toit ouvrant, un picot destiné à s'engager dans une rainure de la patte et autorisant un déplacement latéral de l'épingle par rapport au toit ouvrant.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :

La figure 1 est une vue en perspective et éclatée des différentes parties d'une structure de toit ouvrant d'un véhicule automobile, pourvu de moyens de fixation latéraux selon la présente invention ;

La figure 2 est une vue éclatée à plus grande échelle des moyens de fixation latéraux selon l'invention ; et

La figure 3 est une vue en coupe, avec arrachement, de l'assemblage du toit ouvrant au brancard, à l'aide des moyens de fixation latéraux selon l'invention.

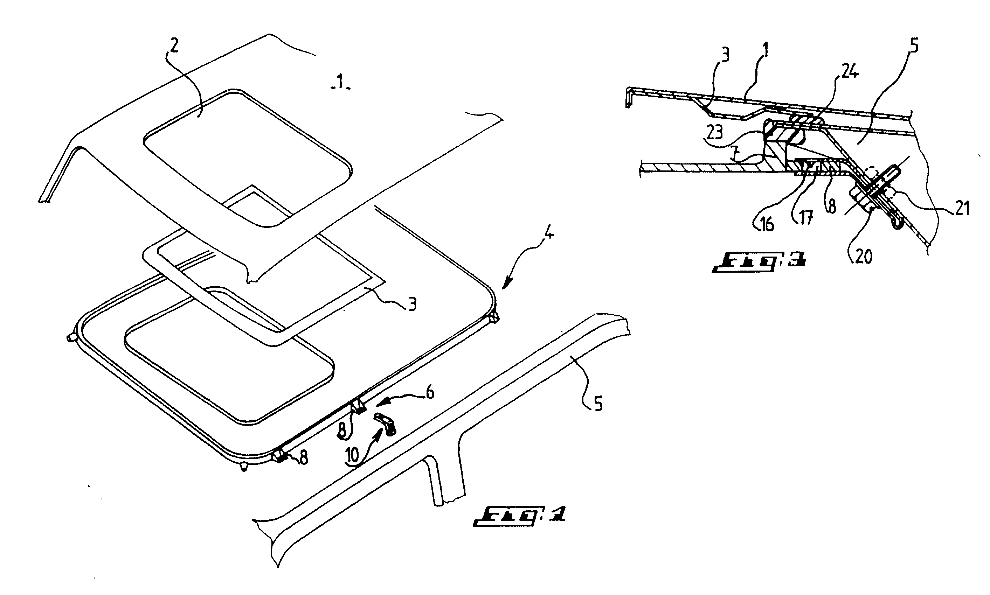

Comme le montre la figure 1, une structure de toit ouvrant d'un véhicule automobile comporte notamment un pavillon 1 pourvu d'un ajour 2 par lequel coulisse la vitre de toit ouvrant, un cadre d'ajour 3 destiné à être fixé sous le pavillon 1 et dont un des rôles est d'assurer la rigidité du pavillon, ainsi que le toit ouvrant 4 comportant de façon connue en soi un cadre, des glissières, un panneau mobile, des moyens de commande, de fixation et d'étanchéité. En 5 on a représenté la partie rigide haute de la caisse du véhicule formant le brancard sur laquelle la structure de toit prend appui.

Le cadre d'ajour ne comporte que des fixations avant et arrière du toit ouvrant. Ces moyens de fixation longitudinaux ne sont pas représentés, car ils sont du type classique. Ainsi ces fixations avant et arrière peuvent être faites par vissage pour assurer le positionnement du toit ouvrant par rapport au pavillon.

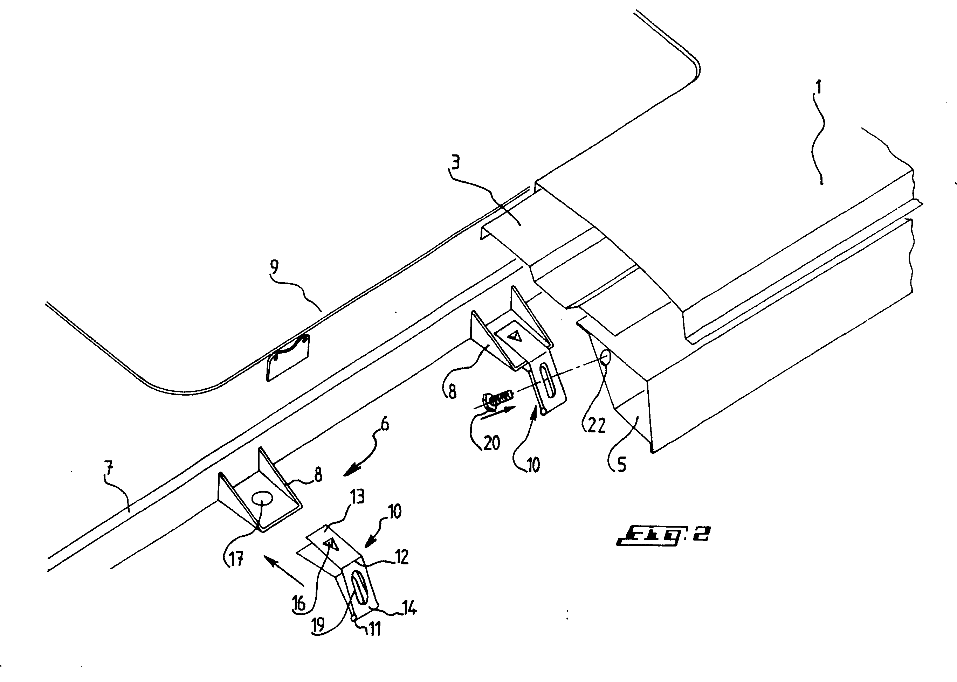

Par contre la figure 1 illustre schématiquement en 6 les moyens de fixation latéraux du toit ouvrant 4. Selon l'invention ces moyens assurent la fixation du toit ouvrant 4 sur le brancard 5 de la caisse du véhicule. Ces moyens de fixation latéraux seront décrits ci-après en se reportant aux figures 2 et 3.

A la figure 2, on a représenté en 7 l'armature du toit ouvrant 4, tandis que la référence 9 désigne la vitre du toit ouvrant. On constate que l'armature 7 porte sur ses côtés longitudinaux des pattes de fixation 8 qui sont solidaires de l'armature 7. La fixation du toit ouvrant au brancard 5 se fait à l'aide d'épingles 10. Une telle épingle est formée d'une tôle rectangulaire de forme oblongue qui est pliée en 11 autour d'une ligne transversale à l'axe longitudinal de la tôle. La pince ainsi formée est coudée en 12 et présente ainsi deux parties 13 et 14. La partie 13 est conformée pour être fixée à une patte 8, tandis que la partie 14 est destinée à être fixée au brancard 5.

La partie 13 comporte sur la face interne d'une de ses branches un picot 16 destiné à s'engager dans un orifice 17 pratiqué dans la patte 8 et pouvant être formé par une rainure. La partie 14 comprend une boutonnière 19 de forme oblongue dans les deux branches. A l'aide d'une vis 20 et d'un écrou 21 l'épingle 10 peut être fixée au brancard 5 qui présente à cette fin un orifice 22. Lorsque l'épingle 10 est fixée sur le brancard 5 à l'aide de la vis et de l'écrou de serrage 20, 22, la partie 13 pince la patte 8, le picot 16 pénétrant dans l'orifice 17 de la patte. Si cette dernière est de forme oblongue, l'épingle peut effectuer un déplacement latéral par rapport à l'armature 7 du toit ouvrant. La partie ouverte 13 de l'épingle s'étendant horizontalement, la partie 14 pourvue du trou oblong 19 est inclinée, ce qui permet un réglage vertical de la position du toit ouvrant. On pourrait également réaliser le trou 22 pratiqué dans le brancard 5 sous forme d'une boutonnière de forme oblongue, s'étendant perpendiculairement à la boutonnière 19 de l'épingle 10, ce qui permettrait un réglage longitudinal de la position du toit ouvrant sur le brancard 5.

A la figure 3, on a représenté de plus en 23 un élément d'étanchéité entre le brancard 5 et l'armature 7 du toit ouvrant. En 24, on reconnaît un autre élément d'étanchéité interposé entre la surface supérieure du brancard 5 et le cadre d'ajour 3 fixé sous le pavillon 1.

Concernant l'assemblage du toit ouvrant à la structure de toit, on amène le toit ouvrant dans une position où les épingles 10 pincent légèrement les pattes 8, les picots 16 empêchant l'échappement des épingles lors des manipulations du toit ouvrant, tout en permettant au toit un déplacement latéral. Après positionnement et fixation du toit ouvrant à l'avant et à l'arrière, par exemple par vissage de façon connue en soi, les épingles 10 sont tirées vers le brancard 5 et fixées par leurs vis de serrage 20 et les écrous 22. Les boutonnières 19 dans la partie 14 de l'épingle 10 et, le cas échéant, les trous 22 dans le brancard, conformés en boutonnières, permettent d'effacer des dispersions pavillon-brancard respectivement suivant les directions en hauteur et dans la direction longitudinale du véhicule.

## Revendications

1. Dispositif de fixation du toit ouvrant (4) d'un véhicule automobile muni d'un pavillon (1) comportant un ajour (2) et rigidifié par un cadre d'ajour (3), ce pavillon (1) étant propre à coiffer la caisse du véhicule en s'appuyant sur un brancard (5) rigide périphérique, caractérisé en ce qu'il comporte des moyens de fixation longitudinaux du toit ouvrant (4) sur le cadre d'ajour (3) et des moyens de fixation latéraux (6) du toit ouvrant (4) sur le brancard (5).

2. Dispositif de fixation selon la revendication 1, caractérisé en ce que les moyens de fixations latéraux (6) comportent des épingles (10) susceptibles d'être vissées au brancard (5) et d'être fixées par serrage à des pattes latérales (8) appartenant au toit ouvrant (4).

3. Dispositif de fixation selon la revendication 2, caractérisé en ce qu'une épingle précitée (10) est formée par une tôle avantageusement rectangulaire, de forme allongée et pliée selon une ligne (11) perpendiculairement à son axe longitudinal, dont la partie ouverte (13) vient pincer une patte (8) du toit ouvrant (4) et qui comporte du côté du pli (11) une boutonnière (19) avantageusement de forme oblongue dans la direction longitudinale de l'épingle et dans laquelle s'engage une vis de serrage et de fixation (20) au brancard (5).

4. Dispositif de fixation selon la revendication 3, caractérisé en ce que l'épingle précitée (10) comporte sur l'une de ses faces internes venant en contact avec une patte (8) du toit ouvrant, un picot (16) destiné à s'engager dans un évidement (17) dans la patte (8) et autorisant un déplacement latéral de l'épingle (10) par rapport au toit ouvrant (4).

5. Dispositif de fixation selon l'une des revendications 3 ou 4, caractérisé en ce que l'épingle (10) précitée est coudée de telle sorte que sa partie ouverte (13) formant pince soit horizontale tandis que sa partie fermée (14) fixée au brancard (5) présente une inclinaison permettant un réglage vertical du toit ouvrant (4).

6. Dispositif de fixation selon la revendication 5, caractérisé en ce qu'une boutonnière (22) est pratiquée dans le brancard (5), qui s'étend perpendiculairement à la boutonnière (19) de l'épingle (10) pour permettre un réglage longitudinal de la position du toit ouvrant (4).

## Patentansprüche

1. Vorrichtung zur Befestigung des Schiebedaches (4) eines, mit einem, eine durch einen Tageslichtöffnungsrahmen (3) versteifte Tageslichtöffnung (2) aufweisenden Karosseriedach, (1) versehen Kraftfahrzeugs, wobei dieses Karosseriedach, (1) geeignet ist, den Fahrzeugkastenaufbau bei Abstützung an einem steifen Umfangslängsträger (5) zu überdecken, dadurch gekennzeichnet, dass sie in Längsrichtung verlaufende Mittel zur Befestigung des Schiebedaches (4) an dem Tageslichtöffnungsrahmen (3) und seitliche Mittel (6) zur Befestigung des Schiebedaches (4) an dem Längsträger (5) aufweist.

2. Befestigungsvorrichtung nach Anspruch 1, dadurch gekennzeichnet, dass die seitlichen Befestigungsmittel (6) mit dem Längsträger (5) verschraubbare und an zum Schiebedach (4) gehörenden Seitenansätzen (8) durch Verklemmung bestigbare Klammern (10) aufweisen.

3. Befestigungsvorrichtung nach Anspruch 1, dadurch gekennzeichnet, dass eine vorgenannte Klammer (10) durch ein in vorteilhafter Weise rechteckiges, Blech langgestreckter Gestalt gebildet ist, welches entlang einer Linie (11) senkrecht zu dessen Längsachse gefaltet ist, deren offener Teil (13) einen Ansatz (8) des Schiebedaches einklemmen soll und der auf der dem Falz (11) benachbarten Seite eine knopflochartige Oeffnung (19) in vorteilhafter Weise in der Längsrichtung der Klammer verlaufender, länglicher Gestalt aufweist, in welcher eine Schraube (20) zum Andrücken und zur Befestigung an dem Längsträger (5) eingreift.

4. Befestigungsvorrichtung gemäss Anspruch 3, dadurch gekennzeichnet, dass die vorgenannte Klammer (10) an ihrer einen mit dem Ansatz (8) des Schiebedaches in Berührung kommenden Innenseite einen Stachel (16) aufweist, der bestimmt ist, in einer Aussparung(17) des Ansatzes (8) einzugreifen und eine Seitenverschiebung der Klammer (10) im Bezug auf das Schiebdach (4) zu gestatten.

5. Befestigungsvorrichtung nach einem der Ansprüche 3 oder 4, dadurch gekennzeichnet, dass die vorgennante Klammer (10) derart gekröpft ist, dass ihr eine Klemme bildender offener Teil (13) waagerecht ist, während ihr an dem Längsträger (5) befestigter, geschlosser Teil (14) eine, eine lotrechte Einstellung des Schiebedaches (4) gestattende, Neigung aufweist.

6. Befestigungsvorrichtung nach Anspruch 5, dadurch gekennzeichnet, dass eine knopflochartige Oeffnung (22) in dem Längsträger (5) gebildet ist, welche sich senkrecht zur knopflochartigen Oeffnung (19) der Klammer (10) erstreckt, um eine Einstellung in Längsrichtung der Lage des Schiebedaches (4) zu gestatten.

## Claims

1. Device for fastening the sliding roof (4) of an automotive vehicle provided with a roofing (1) comprising an opening (2) for daylight and stiffened by an opening frame (3), this roofing (1) being suitable for topping the body of the vehicle by bearing upon a rigid peripheral runner (5), characterized in that it comprises longitudinal means for the fastening of the sliding roof (4) upon the opening frame (3) and lateral means (6) for the fastening of the sliding roof (4) upon the runner (5).

2. Fastening device according to claim 1, characterized in that the lateral fastening means (6) comprise clips (10) susceptible of being secured by screws to the runner (5) and of being secured through clamping to side lugs (8) belonging to the sliding roof (4).

3. Fastening device according to claim 2, characterized in that one of aforesaid clip (10) is formed of an advantageously rectangular metal sheet of elongated shape and folded along a line (11) perpendicular to its longitudinal axis, the open portion (13) of which is caused to nip one lug (8) of the sliding roof (4) and which comprises towards the fold (11) a buttonhole (19) advantageously of oblong shape in the longitudinal direction of the clip and which is engaged by a screw (20) for clamping and fastening to the runner (5°).

4. Fastening device according to claim 3, characterized in that the aforesaid clip (10) comprises on one of its inner faces coming in contact with one lug (8) of the sliding roof, a barb (16) adapted to engage a recess (17) in the lug (8) and allowing a sidewise displacement of the clip (10) with respect to the sliding roof (4).

5. Fastening device according to one of claims 3 or 4, characterized in that the aforesaid clip (10) is bent so that its open portion (13) forming a nip be horizontal whereas its closed portion (14) secured to the runner (5) exhibits a slope permitting a vertical adjustment of the sliding roof (4).

6. Fastening device according to claim 5, characterized in that a buttonhole (22) is formed in the runner (5), which extends perpendicularly to the buttonhole (19) of the clip (10) to allow a longitudinal adjustment of the position of the sliding roof (4).

Fig.3

Fig.1

Fig.2